# EUROPÄISCHE PATENTSCHRIFT

(11) **EP 4 144 965 B1**
(45) Veröffentlichungstag und Bekanntmachung des Hinweises auf die Patenterteilung: **26.06.2024**
(21) Anmeldenummer: 22188208.7
(22) Anmeldetag: 02.08.2022
(51) Int. Cl.: F01N 3/20

(54) **ABGASHEIZER**
EXHAUST HEATER
ÉLÉMENT DE CHAUFFAGE DE GAZ D'ÉCHAPPEMENT

(30) Priorität: 02.09.2021 DE 102021122681
(43) Veröffentlichungstag der Anmeldung: 08.03.2023
(73) Patentinhaber: Purem GmbH, 66539 Neunkirchen (DE)
(72) Erfinder: Uysal, Fatih, Plochingen (DE); Höckel, Sandra, Esslingen am Neckar (DE)
(74) Vertreter: Ruttensperger Lachnit Trossin Gomoll

(56) Entgegenhaltungen:
- EP-A1- 3 825 528
- EP-A1- 3 964 696
- EP-A1- 4 060 169

## Beschreibung

Die vorliegende Erfindung betrifft einen Abgasheizer, mit welchem in einer Abgasanlage eines Kraftfahrzeugs Wärme auf das darin strömende, von einer Brennkraftmaschine ausgestoßene Abgas übertragen werden kann, um dadurch insbesondere in einer Startphase des Betriebs einer Brennkraftmaschine stromabwärts bezüglich des Abgasheizers angeordnete Systembereiche, wie zum Beispiel Katalysatoren oder Partikelfilter, schneller auf Betriebstemperatur zu bringen.

Ein Abgasheizer gemäß dem Oberbegriff des Anspruchs 1 ist aus der EP 3 825 528 A1 bekannt. Bei diesem Abgasheizer umfasst eine Trägeranordnung einen als Blechumformteil ausgebildeten, konisch geformten Träger. An einer Seite des konisch geformten Trägers ist ein spiralartig gewundener Heizabschnitt eines Heizleiters positioniert. An radial sich erstreckenden Verbindungsstegen des konisch geformten Trägers sind kammartig ausgebildete, zwischen Windungsabschnitte des Heizabschnitts eingreifende Halteelemente und durch Verschweißung oder Verlötung festgelegt.

Die nachveröffentlichte EP 4 060 169 A1 und die nachveröffentlichte EP 3 964 696 A1 offenbaren jeweils einen Abgasheizer, bei welchem an beiden Seiten eines plattenartig ausgebildeten Heizleiters Trägerelemente einer Trägeranordnung angeordnet sind. Die Trägerelemente weisen einen ringartigen radial äußeren Bereich auf, von welchem an mehreren Umfangspositionen Trägerarme sich nach innen erstrecken. Die den ringartigen äußeren Bereich und die Trägerarme umfassenden Trägerelemente sind als Blechumformteile ausgebildet.

Aus der nachveröffentlichten deutschen Patentanmeldung DE 10 2021 109 568 ist ein Abgasheizer bekannt, bei welchem zwischen zwei aus Blechmaterial aufgebauten, im Wesentlichen plattenartigen Trägerelementen einer Trägeranordnung zwei durch Heraustrennen aus einem Flachmaterial bereitgestellte, im Wesentlichen plattenartig bzw. flächig ausgebildete Heizleiter einer Heizleiteranordnung in einer Abgas-Hauptströmungsrichtung aufeinander folgend angeordnet sind. Durch eine Mehrzahl von bolzenartig ausgebildeten Verbindungselementen ist der geschichtete Aufbau von Trägerelementen und dazwischen angeordneten Heizleitern zusammengehalten. Um eine elektrische Isolierung der Heizleiter bezüglich der Trägerelemente bzw. auch bezüglich einander zu erreichen, sind zwischen diesen jeweils mehrere Abstützelemente aus elektrisch isolierendem Material, beispielsweise Keramikmaterial, angeordnet.

Es ist die Aufgabe der vorliegenden Erfindung, einen Abgasheizer bereitzustellen, bei welchem bei verbessertem Wärmeübertragungsvermögen insbesondere bei hohen Abgastemperaturen ein stabiler Zusammenhalt der Heizleiteranordnung mit der Trägeranordnung gewährleistet ist.

Erfindungsgemäß wird diese Aufgabe gelöst durch einen Abgasheizer für eine Abgasanlage einer Brennkraftmaschine, umfassend eine Trägeranordnung und eine an der Trägeranordnung getragene Heizleiteranordnung mit wenigstens einem Heizleiter, wobei die Trägeranordnung ein eine Abgasheizer-Längsachse umgebendes, ringartiges erstes Trägerelement und eine Mehrzahl von von dem ersten Trägerelement separat ausgebildeten, in einem ersten Verbindungsbereich mit dem ersten Trägerelement und in einem zweiten Verbindungsbereich mit einem Kopplungsbereich der Heizleiteranordnung verbundenen zweiten Trägerelementen umfasst.

Durch das Ausgestalten der zweiten Trägerelemente als separate Bauteile wird es möglich, diese sowohl mit der Heizleiteranordnung, als auch dem ringartigen ersten Trägerelement in einer an die jeweils auftretenden thermischen Belastungen verbessert angepassten Art und Weise zu verbinden, um dadurch insbesondere eine übermäßige Abschirmung der Heizleiteranordnung in den Kopplungsbereichen, in welchen diese in Tragewechselwirkung mit der Trägeranordnung steht, zu vermeiden.

Besonders vorteilhaft bzw. bevorzugt ist dabei eine Ausgestaltung, bei welcher die zweiten Trägerelemente in ihrem ersten Verbindungsbereich mit dem ersten Trägerelement elektrisch isoliert verbunden sind. Es muss dann keine elektrische Isolierung zwischen den Trägerelementen und der Heizleiteranordnung vorgesehen sein, so dass in mit den zweiten Verbindungsbereichen verbundenen Kopplungsbereichen die Heizleiteranordnung nicht durch der elektrischen Isolierung dienende Bauteile abgeschirmt ist.

Beispielsweise können die zweiten Trägerelemente in ihrem ersten Verbindungsbereich mit dem ersten Trägerelement vermittels eines Verbindungselements verbunden sein, wobei zwischen dem ersten Verbindungsbereich und dem ersten Trägerelement ein Isolierelement angeordnet ist oder/und zwischen dem ersten Verbindungsbereich und dem Verbindungselement ein Isolierelement angeordnet ist.

Um dabei eine unmittelbare Anströmung mit Abgas zu vermeiden und somit die Bereiche, in welchen beispielsweise bolzenartige aufgebaute Verbindungselemente eingesetzt werden, einen Verlust der stabilen Haltewechselwirkung durch unterschiedliche thermische Ausdehnungen zu vermeiden, wird vorgeschlagen, dass das erste Trägerelement in Zuordnung zu wenigstens einem, vorzugsweise jedem ersten Verbindungsbereich einen Strömungsabschirmbereich umfasst, und dass der wenigstens eine, vorzugsweise jeder erste Verbindungsbereich an einer Abströmseite des zugeordneten Strömungsabschirmbereichs angeordnet ist.

Bei einer einfach und stabil zu realisierenden Ausgestaltung können die zweiten Trägerelemente in ihrem zweiten Verbindungsbereich durch Materialschluss, vorzugsweise Verschweißen, mit der Heizleiteranordnung verbunden sein. Dies vermeidet jedwede übermäßige Abschirmung der Heizleiteranordnung im Bereich der zweiten Verbindungselemente. Ferner trägt diese Art der Verbindung dazu bei, dass auch die zweiten Verbindungselemente durch die Heizleiteranordnung erwärmt werden und somit die Oberfläche, an welcher Wärme auf das den Heizleiter umströmende Abgas übertragen wird, vergrößert werden kann.

Für eine stabile Halterung der Heizleiteranordnung an der Trägeranordnung wird vorgeschlagen, dass bei wenigstens einem als Verbindungsarm ausgebildeten zweiten Trägerelement der erste Verbindungsbereich und der zweite Verbindungsbereich bezüglich einander radial versetzt angeordnet sind oder/und sich in radialer Richtung nicht überlappen.

Hierbei kann beispielsweise wenigstens ein, vorzugsweise jedes als Verbindungarm ausgebildete zweite Trägerelement in seinem zweiten Verbindungsbereich mit einem radial inneren Kopplungsbereich der Heizleiteranordnung verbunden sein.

Weiter kann eine stabile Halterung der Heizleiteranordnung an der Trägeranordnung dadurch unterstützt werden, dass bei wenigstens einem als Verbindungsklammer ausgebildeten zweiten Trägerelement der erste Verbindungsbereich und der zweite Verbindungsbereich bezüglich einander radial im Wesentlichen nicht versetzt angeordnet sind oder/und sich in radialer Richtung überlappen.

Dies kann dadurch realisiert werden, dass wenigstens ein, vorzugsweise jedes als Verbindungsklammer ausgebildete zweite Trägerelement mit einem radial äußeren Kopplungsbereich der Heizleiteranordnung verbunden ist.

Um dabei über den Umfang verteilt eine im Wesentlichen gleiche Haltewirkung erzielen zu können, wird vorgeschlagen, dass zwischen wenigstens zwei als Verbindungsarm ausgebildeten zweiten Trägerelementen wenigstens ein als Verbindungsklammer ausgebildetes zweites Trägerelement vorgesehen ist, oder/und dass zwischen wenigstens zwei als Verbindungsklammer ausgebildeten zweiten Trägerelementen wenigstens ein als Verbindungsarm ausgebildetes zweites Trägerelement vorgesehen ist.

Die Heizleiteranordnung kann wenigstens einen im Wesentlichen plattenartig ausgebildeten Heizleiter umfassen. Ein derartiger plattenartig bzw. flächig ausgebildeter Heizleiter kann beispielsweise durch Heraustrennen aus einem plattenartigen Metallrohling erzeugt werden. Um eine möglichst große Oberfläche für die thermische Wechselwirkung mit den Abgasheizer durchströmendem Abgas zu erreichen, wird vorgeschlagen, dass die Heizleiteranordnung wenigstens einen mit einer Mehrzahl von in Umfangsrichtung aufeinander folgend angeordneten Mäander-Windungsfeldern ausgebildeten Heizleiter umfasst, wobei in Umfangsrichtung aufeinander folgende Mäander-Windungsfelder alternierend in einem radial inneren Windungsfeld-Verbindungsbereich und einem radial äußeren Windungsfeld-Verbindungsbereich aneinander anschließen.

Ferner kann eine effiziente thermische Wechselwirkung mit den Abgasheizer durchströmendem Abgas dadurch erreicht werden, dass die Heizleiteranordnung zwei axial aufeinander folgend angeordnete Heizleiter umfasst.

Bei einer Parallelschaltung der Heizleiter können in wenigstens einem, vorzugsweise jedem zur Verbindung mit einem zweiten Verbindungsbereich vorgesehenen Kopplungsbereich der Heizleiteranordnung die wenigstens zwei Heizleiter miteinander vorzugsweise materialschlüssig verbunden sein.

Hierbei kann für eine stabile Halterung der Heizleiteranordnung vorgesehen sein, dass wenigstens ein Kopplungsbereich der Heizleiteranordnung an einem radial inneren Windungsfeld-Verbindungsbereich vorgesehen ist, oder/und dass wenigstens ein Kopplungsbereich der Heizleiteranordnung an einem radial äußeren Windungsfeld-Verbindungsbereich vorgesehen ist.

Die Erfindung betrifft ferner eine Abgasanlage für eine Brennkraftmaschine in einem Fahrzeug, umfassend wenigstens einen erfindungsgemäß aufgebauten Abgasheizer.

Die vorliegende Erfindung wird nachfolgend mit Bezug auf die beiliegenden Figuren detailliert beschrieben. Es zeigt:
- Fig. 1: einen Abgasheizer in perspektivischer Ansicht;
- Fig. 2: den Abgasheizer der Fig. 1 in einer anderen perspektivischen Ansicht;
- Fig. 3: eine Teil-Axialansicht des Abgasheizers der Fig. 1 und 2;
- Fig. 4: eine perspektivische Detailansicht des Abgasheizers der Fig. 1 und 2 im Bereich eines als Verbindungsarm ausgebildeten zweiten Trägerelements;
- Fig. 5: das Detail V in Figur 4 vergrößert;
- Fig. 6: das Detail VI in Figur 4 vergrößert;
- Fig. 7: eine perspektivische Detailansicht des Abgasheizers der Fig. 1 und 2 im Bereich eines als Verbindungsklammer ausgebildeten zweiten Trägerelements.

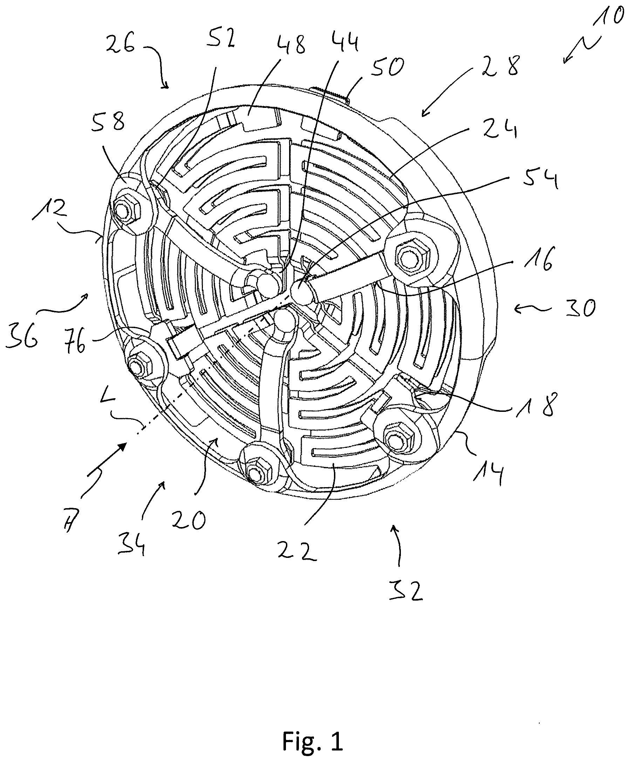

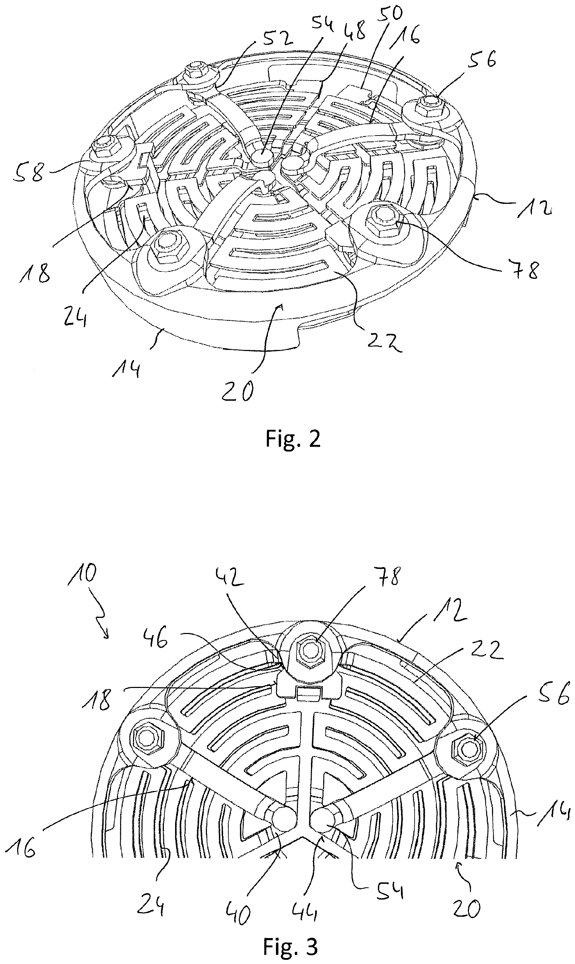

Die Fig. 1 bis 3 zeigen in perspektivischer Ansicht bzw. in Axialansicht einen allgemein mit 10 bezeichneten Abgasheizer für eine Abgasanlage einer Brennkraftmaschine. Der Abgasheizer 10 dient dazu, Wärme auf diesen durch strömendes Abgas zu übertragen, um insbesondere in einer Startphase des Betriebs einer Brennkraftmaschine stromabwärts des Abgasheizers 10 angeordnete Systembereiche, wie z. B. Katalysatoren oder Partikelfilter, durch das am Abgasheizer 10 erwärmte Abgas schneller auf die für die jeweils durchzuführende Reaktion erforderliche Betriebstemperatur zu bringen.

Der Abgasheizer 10 umfasst eine allgemein mit 12 bezeichnete Trägeranordnung. Die Trägeranordnung 12 umfasst ein beispielsweise aus Blechmaterial geformtes, ringartiges erstes Trägerelement 14, welches eine Abgasheizer-Längsachse L in Umfangsrichtung vorzugsweise im Wesentlichen vollständig umgibt und somit beispielsweise eine geschlossene Ringstruktur aufweisen kann. Bei Unterbringung in einer Abgasführungskomponente einer Abgasanlage ist die Abgasheizer-Längsachse L im Wesentlichen in einer Abgas-Hauptströmungsrichtung A orientiert, in welcher das von einer Brennkraftmaschine ausgestoßene Abgas auf den Abgasheizer 10 zu strömt.

Die Trägeranordnung 12 umfasst ferner eine Mehrzahl von als Verbindungsarme ausgebildeten zweiten Trägerelementen 16 und eine Mehrzahl von als Verbindungsklammern ausgebildeten zweiten Trägerelementen 18. Die zweiten Trägerelemente 16, 18 sind beispielsweise ebenfalls aus Blechmaterial bzw. Metallmaterial aufgebaut und als vom ersten Trägerelement 12 separat ausgebildete Bauteile bereitgestellt.

An der Trägeranordnung 12 ist eine allgemein mit 20 bezeichnete Heizleiteranordnung getragen. Die Heizleiteranordnung 20 ist im dargestellten Ausgestaltungsbeispiel mit zwei in Richtung der Abgasheizer-Längsachse L aufeinander folgend angeordneten Heizleitern 22, 24 aufgebaut, wobei der Heizleiter 22 weiter stromaufwärts angeordnet ist als der Heizleiter 24.

Die beiden Heizleiter 22, 24 weisen eine zur Abgasheizer-Längsachse L im Wesentlichen orthogonal ausgedehnte, plattenartige Struktur auf und sind beispielsweise durch Heraustrennen aus einem Metallmaterialrohling bereitgestellt. Um eine möglichst große Oberfläche für die thermische Wechselwirkung mit den Abgasheizer 10 durchströmendem Abgas zu erreichen, weisen die axial aufeinander folgend angeordneten Heizleiter 22, 24 eine Mehrzahl von in Umfangsrichtung aufeinander folgend angeordneten Mäander-Windungsfeldern 26, 28, 30, 32, 34, 36 auf. In jedem der Mäander-Windungsfelder 26, 28, 30, 32, 34, 36 weisen die Heizleiter 22, 24 eine Mehrzahl von im Wesentlichen in Umfangsrichtung verlaufenden und radial zueinander gestaffelt liegenden Mäander-Windungsabschnitten auf. Einander in Umfangsrichtung unmittelbar benachbarte Mäander-Windungsfelder 26, 28, 30, 32, 34, 36 sind alternierend in einem radial inneren Windungsfeld-Verbindungsbereich 40 oder einem radial äußeren Windungsfeld-Verbindungsbereich 42 miteinander verbunden bzw. schließen in diesen radial inneren bzw. radial äußeren Windungsfeld-Verbindungsbereichen 40, 42 aneinander an.

Während in den einzelnen Mäander-Windungsfeldern 26, 28, 30, 32, 34, 36 die Heizleiter 22, 24 mit ihren Mäander-Windungsabschnitten in axialem Abstand zueinander liegen, sind die Heizleiter 22, 24 so geformt, dass in den radial inneren Windungsfeld-Verbindungsbereichen 40 und den radial äußeren Windungsfeld-Verbindungsbereichen 42 die Heizleiter 22, 24 aneinander anliegen, um dadurch mit der Kopplungsanordnung 12 verbundene radial innere Kopplungsbereiche 44 bzw. radial äußere Kopplungsbereiche 46 der Heizleiteranordnung 20 bereitzustellen, in welchen diese mit der Trägeranordnung 12 bzw. den zweiten Trägerelementen 16, 18 derselben verbunden ist.

In den beiden einander unmittelbar benachbarten Mäander-Windungsfeldern 26, 28 stellen die beiden Heizleiter 22, 24 mit ihren radial äußersten Mäander-Windungsabschnitten in miteinander verbundenen Bereichen derselben jeweilige Kontaktelemente 48, 50 bereit, in welchen die Heizleiteranordnung 20 über jeweilige Kontakteinheiten mit einer Spannungsquelle elektrisch leitend verbunden werden kann.

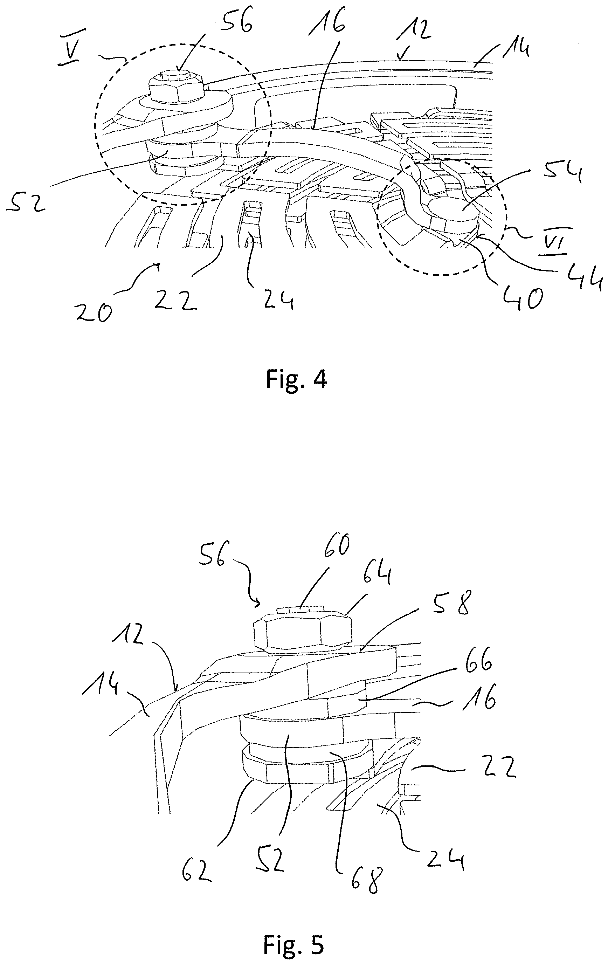

Die Fig. 4 zeigt detaillierter ein als Verbindungsarm ausgebildetes zweites Trägerelement 16. Dieses zweite Trägerelement 16 bzw. jedes als Verbindungsarm ausgebildete zweite Trägerelement 16 erstreckt sich im Wesentlichen in radialer Richtung und stellt in seinem radial äußeren Endbereich einen ersten Verbindungsbereich 52 zur Anbindung an das erste Trägerelement 14 der Trägeranordnung 12 bereit. In seinem radial innen liegenden Endbereich stellt das beispielsweise aus Blechmaterial geformte und als Verbindungsarm ausgebildete zweite Trägerelement 16 einen bezüglich des ersten Verbindungsbereichs 52 radial versetzten und mit diesem sich in radialer Richtung bzw. in Umfangsrichtung nicht überlappenden zweiten Verbindungsbereich 54 bereit, in welchem dieses mit einem radial inneren Kopplungsbereich 44 der Heizleiteranordnung 20 fest verbunden ist. Diese feste Verbindung erfolgt vorzugsweise durch Materialschluss, also beispielsweise Verschweißen, wobei durch diesen Materialschluss das bzw. jedes als Verbindungsarm ausgebildete zweite Trägerelement 16 mit beiden Heizleitern 22, 24 in dem einen jeweiligen radial inneren Kopplungsbereich 44 bereitstellenden radial inneren Windungsfeld-Verbindungsbereich 40 fest verbunden ist. Es existiert somit in diesem Bereich der Anbindung der Heizleiteranordnung 20 an die Trägeranordnung 12 keine Abschirmung, insbesondere keine thermische Abschirmung, der Heizleiteranordnung 20.

In ihren radial außen liegenden ersten Verbindungsbereichen 52 sind die als Verbindungsarme ausgebildeten zweiten Trägerelemente 16 unter Verwendung eines jeweiligen im Wesentlichen bolzenartig ausgebildeten Verbindungselements 56 an das erste Trägerelement 14 angebunden. In Zuordnung zu jedem ersten Verbindungsbereich 52 ist am ersten Trägerelement 14 ein nach radial innen vorstehender, in Richtung stromaufwärts kuppelartig ausgebildeter Strömungsabschirmbereich 58 ausgebildet, welcher den zugeordneten ersten Verbindungsbereich 52 in Umfangsrichtung und in radialer Richtung im Wesentlichen vollständig überdeckt und aufgrund des Umstandes, dass er an der stromaufwärtigen Seite bezüglich des zugeordneten ersten Verbindungsbereichs 52 positioniert ist, diesen gegen die direkte Anströmung mit Abgas abschirmt.

Jedes Verbindungselement 56 ist mit einem Schraubbolzen mit einem Außengewindeschaft 60, einem Kopf 62 und einer auf den Außengewindeschaft 60 geschraubten Mutter 64 ausgebildet. Um eine elektrische Isolierung der als Verbindungsarme ausgebildeten zweiten Verbindungselemente 16 in ihren ersten Verbindungsbereichen 52 zu erreichen, ist zwischen jedem ersten Verbindungsbereich 52 und dem ersten Trägerelement 14 bzw. einem daran vorgesehenen Strömungsabschirmbereich 58 ein beispielsweise mit Keramikmaterial aufgebautes, scheibenartiges Isolierelement 66 angeordnet. Gleichermaßen ist zwischen dem ersten Verbindungsbereich 52 und dem Kopf 62 des zugeordneten Verbindungselements 56 ein beispielsweise mit Keramikmaterial aufgebautes Isolierelement 68 angeordnet. Somit ist jeder erste Verbindungsbereich 52 zwischen den beiden diesem zugeordneten Isolierelementen 66, 68 durch ein jeweiliges Verbindungselement 60 stabil und elektrisch isoliert am ersten Trägerelement 14 getragen. Durch die Strömungsabschirmbereiche 58 sind auch die Isolierelemente 66, 68 und wesentliche Bereiche eines jeweiligen Verbindungselements 56 gegen die unmittelbare Anströmung mit Abgas abgeschirmt, so dass eine übermäßige thermische Belastung in diesem Bereich nicht auftritt und ein stabiler mechanischer Zusammenhalt der als Verbindungsarme ausgebildeten zweiten Trägerelemente 16 mit dem ringartigen ersten Trägerelement 14 gewährleistet ist.

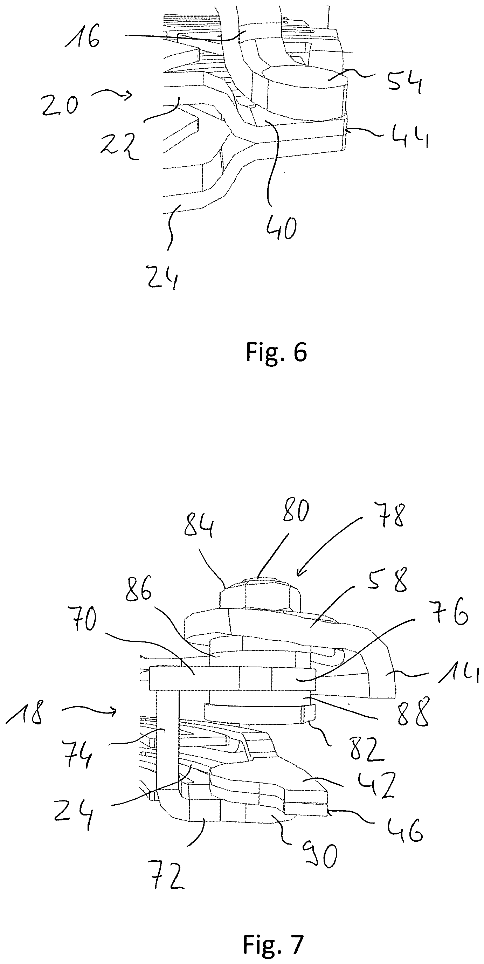

In Fig. 7 ist ein als Verbindungsklammer ausgebildetes zweites Trägerelement 18 detaillierter dargestellt. Jedes als Verbindungsklammer ausgebildete zweite Trägerelement 18 weist eine im Wesentlichen U-förmige Struktur mit zwei U-Schenkeln 70, 72 und einem diese verbindenden Verbindungssteg 74 auf. Beispielsweise kann einer der U-Schenkel 70, 72 mit dem Verbindungssteg 74 integral ausgebildet sein und mit dem als separates Bauteil aufgebauten anderen U-Schenkel, im dargestellten Ausgestaltungsbeispiel dem U-Schenkel 70, beispielsweise durch Materialschluss, wie z. B. Verschweißen oder dgl., fest verbunden sein. Auch eine einstückige Ausgestaltung der mit U-förmiger Struktur, also als Verbindungsklammern, ausgebildeten zweiten Trägerelemente 18 als Blechumformteile ist grundsätzlich möglich.

Am U-Schenkel 70 des zweiten Trägerelements 18 ist dessen erster Verbindungsbereich 76 ausgebildet, in welchem das als Verbindungsklammer ausgebildete zweite Verbindungselement 18 mit dem ersten Trägerelement 14 durch ein beispielsweise bolzenartig ausgebildetes Verbindungselement 78 verbunden ist. Auch dieses Verbindungselement 78 ist mit einem Außengewindeschaft 80 und einem daran vorgesehenen Kopf 82 sowie einer auf den Außengewindeschaft 80 aufgeschraubten Mutter 84 aufgebaut. Zwischen dem ersten Verbindungsbereich 76 und dem zugeordneten, am ersten Trägerelement 14 vorgesehenen Strömungsabschirmbereich 58 ist ein Isolierelement 86 vorgesehen. Gleichermaßen ist zwischen dem ersten Verbindungsbereich 76 und dem Kopf 82 des Verbindungselements 78 ein Isolierelement 88 vorgesehen, so dass der erste Verbindungsbereich 76 gegen die unmittelbare Anströmung mit Abgas im Wesentlichen abgeschirmt elektrisch isoliert am ersten Trägerelement 14 getragen ist.

Der im gleichen radialen Bereich wie der erste Verbindungsbereich 76 und mit diesem sich im Wesentlichen vollständig radial und in Umfangsrichtung überlappend angeordnete zweite Verbindungsbereich 90 des als Verbindungsklammer ausgebildeten zweiten Trägerelements 18 hintergreift die beiden Heizleiter 22, 24 der Heizleiteranordnung 20 an ihrer stromabwärts orientierten Seite in einem einen radial äußeren Kopplungsbereich 46 bereitstellenden radial äußeren Windungsfeld-Verbindungsbereich 42 und ist dort mit den beiden Heizleitern 22, 24 durch Materialschluss, beispielsweise Verschweißung, fest verbunden.

In den Fig. 1 bis 3 ist zu erkennen, dass die Trägeranordnung 12 in Umfangsrichtung aufeinander folgend jeweils ein als Verbindungsarm ausgebildetes zweites Verbindungselement 16 mit radial zueinander versetzt liegenden und einander nicht überlappenden ersten und zweiten Verbindungsbereichen 52, 54 und ein als Verbindungsklammer ausgebildetes zweites Trägerelement 18 mit radial zueinander im Wesentlichen nicht versetzten und einander überlappenden ersten und zweiten Verbindungsbereichen 76, 90 umfasst. Somit wird alternierend eine stabile Halterung der Heizleiteranordnung 20 in ihrem radial äußeren Bereich und in ihrem radial inneren Bereich gewährleistet. Ferner sind bei dieser Anordnung die im Wesentlichen radial sich erstreckenden und als Verbindungsarme ausgebildeten zweiten Trägerelemente 16 so angeordnet, dass sie zwischen zwei in Umfangsrichtung einander unmittelbar benachbarten Mäander-Windungsfeldern 26, 28, 30, 32, 34, 36 gebildeten Zwischenräume positioniert sind bzw. diese an der stromaufwärtigen Seite der Heizleiteranordnung 20 überdecken. Somit wird zumindest in den von derartigen zweiten Trägerelementen 16 überdeckten Bereichen das unmittelbare Hindurchströmen von Abgas durch die Heizleiteranordnung 20, ohne dass eine thermische Wechselwirkung mit den Heizleitern 22, 24 entsteht, vermieden. Ferner sind die zweiten Trägerelemente 16, 18 durch die materialschlüssige bzw. direkte und ohne Zwischenlagerung von Isolierelementen erfolgende Anbindung an die Heizleiteranordnung 20 in direktem thermischen Kontakt mit dieser, so dass bei Erwärmung der Heizleiteranordnung 20 durch Anlegen einer elektrischen Spannung an die Kontaktelemente 48, 50 auch die zweiten Trägerelemente 16, 18 erwärmt werden und somit Wärme auf diese umströmendes Abgas übertragen können.

Durch die vorliegende Erfindung wird ein einfach strukturierter, mit wenigen Bauteilen herstellbarer Abgasheizer bereitgestellt, bei welchem die im dargestellten Ausgestaltungsbeispiel zueinander parallel geschalteten Heizleiter im Wesentlichen keine von Abgas nicht anströmbaren bzw. nicht zur Wärmeübertragung auf Abgas nutzbaren Längenbereiche aufweisen. Dies erhöht die Effizienz der Wärmeübertragung. Gleichzeitig ist die Heizleiteranordnung durch die verschiedenen zweiten Trägerelemente stabil am ringartigen ersten Trägerelement getragen, wobei aufgrund der in Bezug auf die Heizleiteranordnung und auch in Bezug auf das erste Trägerelement vorgesehenen Arten der Verbindung die Gefahr, dass unterschiedliche thermische Ausdehnungen zu einem Verlust der Haltestabilität führen, weitestgehend ausgeschlossen ist. Dazu trägt insbesondere bei, dass die der elektrischen Isolierung dienenden Isolierelemente nicht zwischen den zweiten Trägerelementen und der Heizleiteranordnung, sondern zwischen den zweiten Trägerelementen und dem ersten Trägerelement wirken und somit nicht unmittelbar durch die Heizleitung erwärmt werden.

Abschließend wird darauf hingewiesen, dass bei dem vorangehend beschriebenen Aufbau eines Abgasheizers verschiedene Variationen möglich sind, ohne vom Prinzip der vorliegenden Erfindung abzuweichen. So könnte beispielweise die Heizleiteranordnung auch nur einen derartigen, im Wesentlichen plattenartigen Heizleiter aufweisen, der beispielsweise in der in den Figuren dargestellten Art und Weise an die Trägeranordnung angebunden sein kann. Ferner könnte die Umfangsabfolge von als Verbindungsarmen und als Verbindungsklammern ausgebildeten zweiten Trägerelementen anders sein, als in den Figuren dargestellt. Die ohne Zwischenlagerung von Isolierelementen vorgesehene Anbindung der zweiten Trägerelemente an die Heizleiteranordnung könnte alternativ oder zusätzlich zu der vorangehend beschriebenen materialschlüssigen Verbindung auch beispielsweise durch bolzenartige Verbindungselemente, wie z. B. Nietbolzen oder dgl., erfolgen.

## Patentansprüche

1. Abgasheizer für eine Abgasanlage einer Brennkraftmaschine, umfassend eine Trägeranordnung (12) und eine an der Trägeranordnung (12) getragene Heizleiteranordnung (20) mit wenigstens einem Heizleiter (22, 24), **dadurch gekennzeichnet, dass** die Trägeranordnung umfasst:
- ein eine Abgasheizer-Längsachse (L) umgebendes, ringartiges erstes Trägerelement (14), und
- eine Mehrzahl von von dem ersten Trägerelement (14) separat ausgebildeten, in einem ersten Verbindungsbereich (52, 76) mit dem ersten Trägerelement (14) und in einem zweiten Verbindungsbereich (54, 90) mit einem Kopplungsbereich (44, 46) der Heizleiteranordnung (22) verbundenen zweiten Trägerelementen (16, 18).

2. Abgasheizer nach Anspruch 1, **dadurch gekennzeichnet, dass** die zweiten Trägerelemente (16, 18) in ihrem ersten Verbindungsbereich (52, 76) mit dem ersten Trägerelement (14) elektrisch isoliert verbunden sind.

3. Abgasheizer nach Anspruch 2, **dadurch gekennzeichnet, dass** die zweiten Trägerelemente (16, 18) in ihrem ersten Verbindungsbereich (52, 76) mit dem ersten Trägerelement (14) vermittels eines Verbindungselements (56, 78) verbunden sind, wobei zwischen dem ersten Verbindungsbereich (52, 76) und dem ersten Trägerelement (14) ein Isolierelement (66, 86) angeordnet ist oder/und zwischen dem ersten Verbindungsbereich (52, 76) und dem Verbindungselement (56, 78) ein Isolierelement (68, 88) angeordnet ist.

4. Abgasheizer nach einem der Ansprüche 1-3, **dadurch gekennzeichnet, dass** das erste Trägerelement (14) in Zuordnung zu wenigstens einem, vorzugsweise jedem ersten Verbindungsbereich (52, 76) einen Strömungsabschirmbereich (58) umfasst, und dass der wenigstens eine, vorzugsweise jeder erste Verbindungsbereich (52, 76) an einer Abströmseite des zugeordneten Strömungsabschirmbereichs (58) angeordnet ist.

5. Abgasheizer nach einem der Ansprüche 1-4, **dadurch gekennzeichnet, dass** die zweiten Trägerelemente (16, 18) in ihrem zweiten Verbindungsbereich (54, 90) durch Materialschluss, vorzugsweise Verschweißen, mit der Heizleiteranordnung (20) verbunden sind.

6. Abgasheizer nach einem der Ansprüche 1-5, **dadurch gekennzeichnet, dass** bei wenigstens einem als Verbindungsarm ausgebildeten zweiten Trägerelement (16) der erste Verbindungsbereich (52) und der zweite Verbindungsbereich (54) bezüglich einander radial versetzt angeordnet sind oder/und sich in radialer Richtung nicht überlappen.

7. Abgasheizer nach Anspruch 6, **dadurch gekennzeichnet, dass** wenigstens ein, vorzugsweise jedes als Verbindungarm ausgebildete zweite Trägerelement (16) in seinem zweiten Verbindungsbereich (54) mit einem radial inneren Kopplungsbereich (44) der Heizleiteranordnung (20) verbunden ist.

8. Abgasheizer nach einem der Ansprüche 1-7, **dadurch gekennzeichnet, dass** bei wenigstens einem als Verbindungsklammer ausgebildeten zweiten Trägerelement (18) der erste Verbindungsbereich (76) und der zweite Verbindungsbereich (90) bezüglich einander radial im Wesentlichen nicht versetzt angeordnet sind oder/und sich in radialer Richtung überlappen.

9. Abgasheizer nach Anspruch 8, **dadurch gekennzeichnet, dass** wenigstens ein, vorzugsweise jedes als Verbindungsklammer ausgebildete zweite Trägerelement (18) mit einem radial äußeren Kopplungsbereich (46) der Heizleiteranordnung (20) verbunden ist.

10. Abgasheizer nach Anspruch 6 oder 7 und Anspruch 8 oder 9, **dadurch gekennzeichnet, dass** zwischen wenigstens zwei als Verbindungsarm ausgebildeten zweiten Trägerelementen (16) wenigstens ein als Verbindungsklammer ausgebildetes zweites Trägerelement (18) vorgesehen ist, oder/und dass zwischen wenigstens zwei als Verbindungsklammer ausgebildeten zweiten Trägerelementen (18) wenigstens ein als Verbindungsarm ausgebildetes zweites Trägerelement (16) vorgesehen ist.

11. Abgasheizer nach einem der Ansprüche 1-10, **dadurch gekennzeichnet, dass** die Heizleiteranordnung (20) wenigstens einen im Wesentlichen plattenartig ausgebildeten Heizleiter (22, 24) umfasst.

12. Abgasheizer nach einem der Ansprüche 1-11, **dadurch gekennzeichnet, dass** die Heizleiteranordnung (20) wenigstens einen mit einer Mehrzahl von in Umfangsrichtung aufeinander folgend angeordneten Mäander-Windungsfeldern (26, 28, 30, 32, 34, 36) ausgebildeten Heizleiter (22, 24) umfasst, wobei in Umfangsrichtung aufeinander folgende Mäander-Windungsfelder (26, 28, 30, 32, 34, 36) alternierend in einem radial inneren Windungsfeld-Verbindungsbereich (40) und einem radial äußeren Windungsfeld-Verbindungsbereich (42) aneinander anschließen.

13. Abgasheizer nach einem der Ansprüche 1-12, **dadurch gekennzeichnet, dass** die Heizleiteranordnung (20) zwei axial aufeinander folgend angeordnete Heizleiter (22, 24) umfasst.

14. Abgasheizer nach Anspruch 13, **dadurch gekennzeichnet, dass** in wenigstens einem, vorzugsweise jedem zur Verbindung mit einem zweiten Verbindungsbereich (54, 90) vorgesehenen Kopplungsbereich (44, 46) der Heizleiteranordnung (20) die wenigstens zwei Heizleiter (22, 24) miteinander vorzugsweise materialschlüssig verbunden sind.

15. Abgasheizer nach Anspruch 12 und Anspruch 14, **dadurch gekennzeichnet, dass** wenigstens ein Kopplungsbereich (44) der Heizleiteranordnung (20) an einem radial inneren Windungsfeld-Verbindungsbereich (40) vorgesehen ist, oder/und dass wenigstens ein Kopplungsbereich (46) der Heizleiteranordnung (20) an einem radial äußeren Windungsfeld-Verbindungsbereich (42) vorgesehen ist.

16. Abgasanlage für eine Brennkraftmaschine in einem Fahrzeug, umfassend wenigstens einen Abgasheizer (10) nach einem der Ansprüche 1-15.

## Claims

1. An exhaust-gas heater for an exhaust-gas system of an internal combustion engine, comprising a carrier arrangement (12) and a heating-conductor arrangement (20) which is carried on the carrier arrangement (12) and which has at least one heating conductor (22, 24), **characterized in that** the carrier arrangement comprises:
- a ring-like first carrier element (14), which surrounds an exhaust-gas-heater longitudinal axis (L), and
- a plurality of second carrier elements (16, 18), which are formed separately from the first carrier element (14) and are connected to the first carrier element (14) in a first connecting region (52, 76) and to a coupling region (44, 46) of the heating-conductor arrangement (22) in a second connecting region (54, 90).

2. The exhaust-gas heater as claimed in claim 1, **characterized in that** the second carrier elements (16, 18) are connected in an electrically insulated manner to the first carrier element (14) in their first connecting region (52, 76).

3. The exhaust-gas heater as claimed in claim 2, **characterized in that** the second carrier elements (16, 18) are connected to the first carrier element (14) in their first connecting region (52, 76) by means of a connecting element (56, 78), wherein an insulating element (66, 86) is arranged between the first connecting region (52, 76) and the first carrier element (14), and/or an insulating element (68, 88) is arranged between the first connecting region (52, 76) and the connecting element (56, 78).

4. The exhaust-gas heater as claimed in one of claims 1-3, **characterized in that** the first carrier element (14) comprises, in assignment to at least one, preferably to each, first connecting region (52, 76), a flow-shielding region (58), and **in that** the at least one, preferably each, first connecting region (52, 76) is arranged on a flow-off side of the assigned flow-shielding region (58).

5. The exhaust-gas heater as claimed in one of claims 1-4, **characterized in that** the second carrier elements (16, 18) are connected to the heating-conductor arrangement (20) in their second connecting region (54, 90) by way of material bonding, preferably welding.

6. The exhaust-gas heater as claimed in one of claims 1-5, **characterized in that**, in the case of at least one second carrier element (16) adapted as a connecting arm, the first connecting region (52) and the second connecting region (54) are arranged so as to be radially offset in relation to one another and/or do not overlap in a radial direction.

7. The exhaust-gas heater as claimed in claim 6, **characterized in that** at least one, preferably each, second carrier element (16) adapted as a connecting arm is connected to a radially inner coupling region (44) of the heating-conductor arrangement (20) in its second connecting region (54).

8. The exhaust-gas heater as claimed in one of claims 1-7, **characterized in that**, in the case of at least one second carrier element (18) adapted as a connecting clip, the first connecting region (76) and the second connecting region (90) are arranged so as to be substantially not radially offset in relation to one another and/or overlap in a radial direction.

9. The exhaust-gas heater as claimed in claim 8, **characterized in that** at least one, preferably each, second carrier element (18) adapted as a connecting clip is connected to a radially outer coupling region (46) of the heating-conductor arrangement (20).

10. The exhaust-gas heater as claimed in claim 6 or 7 and claim 8 or 9, **characterized in that** at least one second carrier element (18) adapted as a connecting clip is provided between at least two second carrier elements (16) adapted as a connecting arm, and/or **in that** at least one second carrier element (16) adapted as a connecting arm is provided between at least two second carrier elements (18) adapted as a connecting clip.

11. The exhaust-gas heater as claimed in one of claims 1-10, **characterized in that** the heating-conductor arrangement (20) comprises at least one substantially plate-like heating conductor (22, 24).

12. The exhaust-gas heater as claimed in one of claims 1-11, **characterized in that** the heating-conductor arrangement (20) comprises at least one heating conductor (22, 24) adapted with a plurality of meandering winding fields (26, 28, 30, 32, 34, 36) which are arranged successively in a circumferential direction, wherein circumferentially successive meandering winding fields (26, 28, 30, 32, 34, 36) adjoin one another alternately in a radially inner winding-field connecting region (40) and a radially outer winding-field connecting region (42).

13. The exhaust-gas heater as claimed in one of claims 1-12, **characterized in that** the heating-conductor arrangement (20) comprises two heating conductors (22, 24) which are arranged in an axially successive manner.

14. The exhaust-gas heater as claimed in claim 13, **characterized in that**, in at least one, preferably each, coupling region (44, 46) of the heating-conductor arrangement (20), provided for connection to a second connecting region (54, 90), the at least two heating conductors (22, 24) are connected to one another preferably in a materially bonded manner.

15. The exhaust-gas heater as claimed in claim 12 and claim 14, **characterized in that** at least one coupling region (44) of the heating-conductor arrangement (20) is provided at a radially inner winding-field connecting region (40), and/or **in that** at least one coupling region (46) of the heating-conductor arrangement (20) is provided at a radially outer winding-field connecting region (42).

16. An exhaust-gas system for an internal combustion engine in a vehicle, comprising at least one exhaust-gas heater (10) as claimed in one of claims 1-15.

## Revendications

1. Un réchauffeur de gaz d'échappement pour un système de gaz d'échappement d'un moteur à combustion interne, comprenant un agencement porteur (12) et un agencement de conducteur de chauffage (20) qui est porté par l'agencement porteur (12) et qui a au moins un conducteur de chauffage (22, 24), **caractérisé en ce que** l'agencement porteur comprend :
- un premier élément porteur (14) en forme d'anneau, qui entoure un axe longitudinal de réchauffeur de gaz d'échappement (L), et
- une pluralité de deuxièmes éléments porteurs (16, 18), formés séparément du premier élément porteur (14) et reliés au premier élément porteur (14) dans une première région de connexion (52, 76) et à une région de couplage (44, 46) de l'agencement de conducteur de chauffage (22) dans une deuxième région de connexion (54, 90).

2. Le réchauffeur de gaz d'échappement selon la revendication 1, **caractérisé en ce que** les deuxièmes éléments porteurs (16, 18) sont connectés de manière électriquement isolée au premier élément porteur (14) dans leur première région de connexion (52, 76).

3. Le réchauffeur de gaz d'échappement selon la revendication 2, **caractérisé en ce que** les deuxièmes éléments porteurs (16, 18) sont reliés au premier élément porteur (14) dans leur première région de connexion (52, 76) au moyen d'un élément de connexion (56, 78), dans lequel un élément isolant (66, 86) est disposé entre la première région de connexion (52, 76) et le premier élément porteur (14), et/ou un élément isolant (68, 88) est disposé entre la première région de connexion (52, 76) et l'élément de connexion (56, 78).

4. Le réchauffeur de gaz d'échappement selon l'une des revendications 1 à 3, **caractérisé en ce que** le premier élément porteur (14) comprend, en association avec au moins une, de préférence chaque, première région de connexion (52, 76), une région de protection contre l'écoulement (58), et **en ce que** ladite au moins une, de préférence chaque, première région de connexion (52, 76) est disposée sur un côté aval d'écoulement de la région de protection contre l'écoulement (58) associée.

5. Le réchauffeur de gaz d'échappement selon l'une des revendications 1 à 4, **caractérisé en ce que** les deuxièmes éléments porteurs (16, 18) sont reliés à l'agencement de conducteur de chauffage (20) dans leur deuxième région de connexion (54, 90) au moyen d'une connexion matérielle, de préférence par soudage.

6. Le réchauffeur de gaz d'échappement selon l'une des revendications 1 à 5, **caractérisé en ce que**, dans le cas d'au moins un deuxième élément porteur (16) adapté comme bras de connexion, la première région de connexion (52) et la deuxième région de connexion (54) sont disposées de manière à être décalées radialement l'une par rapport à l'autre et/ou à ne pas se chevaucher dans une direction radiale.

7. Le réchauffeur de gaz d'échappement selon la revendication 6, **caractérisé en ce qu'**au moins un, de préférence chaque, deuxième élément porteur (16) adapté comme bras de connexion est relié à une région de couplage radialement intérieure (44) de l'agencement de conducteur de chauffage (20) dans sa deuxième région de connexion (54).

8. Le réchauffeur de gaz d'échappement selon l'une des revendications 1 à 7, **caractérisé en ce que**, dans le cas d'au moins un deuxième élément porteur (18) adapté comme clip de connexion, la première région de connexion (76) et la deuxième région de connexion (90) sont disposées de manière à ne pas être décalées radialement l'une par rapport à l'autre et/ou à se chevaucher dans une direction radiale.

9. Le réchauffeur de gaz d'échappement selon la revendication 8, **caractérisé en ce qu'**au moins un, de préférence chaque, deuxième élément porteur (18) adapté comme clip de connexion est connecté à une région de couplage radialement extérieure (46) de l'agencement de conducteur de chauffage (20).

10. Le réchauffeur de gaz d'échappement selon la revendication 6 ou 7 et la revendication 8 ou 9, **caractérisé en ce qu'**au moins un deuxième élément porteur (18) adapté comme clip de connexion est prévu entre au moins deux deuxièmes éléments porteurs (16) adaptés comme bras de connexion, et/ou **en ce qu'**au moins un deuxième élément porteur (16) adapté comme bras de connexion est prévu entre au moins deux deuxièmes éléments porteurs (18) adaptés comme clip de connexion.

11. Le réchauffeur de gaz d'échappement selon l'une des revendications 1 à 10, **caractérisé en ce que** l'agencement de conducteur de chauffage comprend au moins un conducteur de chauffage sensiblement en forme de plaque (22, 24).

12. Le réchauffeur de gaz d'échappement selon l'une des revendications 1 à 11, **caractérisé en ce que** l'agencement de conducteur de chauffage comprend au moins un conducteur de chauffage (22, 24) adapté avec une pluralité de champs d'enroulement sinueux (26, 28, 30, 32, 34, 36) qui sont disposés successivement dans une direction circonférentielle, dans laquelle des champs d'enroulement sinueux successifs (26, 28, 30, 32, 34, 36) se joignent alternativement dans une région de connexion du champ d'enroulement radialement intérieur (40) et une région de connexion du champ d'enroulement radialement extérieur (42).

13. Le réchauffeur de gaz d'échappement selon l'une des revendications 1 à 12, **caractérisé en ce que** l'agencement de conducteur de chauffage (20) comprend deux conducteurs de chauffage (22, 24) qui sont disposés axialement l'un après l'autre.

14. Le réchauffeur de gaz d'échappement selon la revendication 13, **caractérisé en ce que**, dans au moins une, de préférence chaque, région de couplage (44, 46) de l'agencement de conducteur de chauffage (20), prévue pour la connexion à une deuxième région de connexion (54, 90), lesdits au moins deux conducteurs de chauffage (22, 24) sont connectés l'un à l'autre de préférence par connexion matérielle.

15. Le réchauffeur de gaz d'échappement selon la revendication 12 et la revendication 14, **caractérisé en ce qu'**au moins une région de couplage (44) de l'agencement de conducteur de chauffage (20) est prévue dans une région de connexion du champ d'enroulement radialement intérieur (40), et/ou **en ce qu'**au moins une région de couplage (46) de l'agencement de conducteur de chauffage (20) est prévue dans une région de connexion du champ d'enroulement radialement extérieur (42).

16. Un système d'échappement pour un moteur à combustion interne dans un véhicule, comprenant au moins un réchauffeur de gaz d'échappement (10) selon l'une des revendications 1 à 15.
